# EUROPEAN PATENT SPECIFICATION

(11) **EP 3 585 156 B1**
(45) Date of publication and mention of the grant of the patent: **27.03.2024**
(21) Application number: 18757191.4
(22) Date of filing: 20.02.2018
(51) Int. Cl.: A01K 61/00, A01K 61/13

(54) **FISH FARM MADE OF A RIGID MATERIAL**
FISCHFARM AUS EINEM STEIFEN MATERIAL
INSTALLATION DE PISCICULTURE CONSTITUÉE D'UN MATÉRIAU RIGIDE

(30) Priority: 21.02.2017 NO 20170251
(43) Date of publication of application: 01.01.2020
(73) Proprietor: Bemlotek AS, 1366 Lysaker (NO)
(72) Inventor: VALUM, Rolf Sverre, 9105 Kvaløya (NO); HAUG, Atle Kielland, 4027 Stavanger (NO); HÆREID, Kåre Olavson, 0283 Oslo (NO)
(74) Representative: Håmsø Patentbyrå AS
(86) International application number: PCT/NO2018/050046
(87) International publication number: WO 2018/156027

(56) References cited:
- WO-A1-2010/128494
- JP-A- H06 113 695
- KR-B1- 100 424 286
- NO-B- 158 401
- NO-B- 166 511
- US-A1- 2006 162 667

## Description

The invention relates to a floating farm for rearing aquatic organisms, the farm comprising one or more rearing units. The buoyancy element of the farm consists of a continuous, rigid floating body. The floating body is advantageously formed of concrete. The farm may be positioned in the open sea or in exposed locations along a coast. The farm is particularly well suited for rearing fish. Conventionally, floating fish farms may be divided into two main groups according to which type of rearing units they comprise. A rearing unit is also termed a cage.

A first main group comprises steel cages. These include rectangular walkways made of steel, which are provided with floating bodies on their bottom side. Each floating body may have the form of a rectangular box. The walkways are joined together with hinges. The steel cages form a grid with longitudinal and transverse walkways. Each edge in a square may be 10 m or 12 m long, for example. The nets, which each form a closed enclosure, are placed in the grid and secured to the steel cages on hooks projecting from special posts or supports. Steel cages are also provided with railings, and the net can be attached to a hand rail with hooks or with lashings. The top edge of the net is thereby raised above the water surface and also forms a jump net for preventing fish from being able to escape from the cage by jumping over the edge. The walkways form a relatively stable platform for the movement of personnel and equipment. Equipment and feed can be stored on the walkways.

A second main group comprises plastic cages. These comprise at least one plastic tube which has been welded together into one continuous ring. Usually, the plastic cage consists of two concentric rings. Plastic cages with three concentric plastic rings are known as well. The plastic tube may be a continuous plastic tube which is joined together at the ends into a ring. The plastic tube may also be formed from straight pipe sections that are welded together into a polygonal ring. The ring may be octagonal, decagonal, etc.

**The plastic** rings are connected to radially oriented brackets made of plastic or steel. Walkways can be placed on top of two concentric rings. The net, which forms a closed enclosure, is placed inside the innermost tube of the buoyancy system and is attached with projecting net hooks. The net hooks may be attached to the tube or to a railing projecting up from the buoyancy system. The circumference for the net in a plastic cage may be, for example, between 90 m and 160 m, which corresponds to a diameter of between 30 m and 50 m approximately. The walkway is relatively narrow. The plastic rings are flexible structures and, consequently, the rings and the walkway will move in relation to waves passing. The walkway is not suitable for storing equipment, and only relatively light equipment can be moved along the walkway. The walkway extends around one cage only. Personnel are dependent on a boat to move from one cage over to another cage.

The patent publication GB 2068847 discloses a plurality of rectangular buoyancy elements made of concrete, which are held together by a wire or chain. The wire or chain extends through flush, elongated channels inside the buoyancy elements. In their adjacent end faces, the elements are formed with recesses at the mouths of the channels. A spacer consisting of an elastic material is positioned in the recesses of the two adjacent end faces between two neighbouring buoyancy elements. The spacer is provided with a through bore for the wire or chain. The elastic spacer absorbs longitudinal forces so that neighbouring elements will not collide, counteracts relative vertical and horizontal lateral movements between two neighbouring elements, while, at the same time, it allows a certain degree of twisting and rotation between two neighbouring elements.

Patent document WO2016/039632 discloses a buoyancy system of modular construction for a cage. The modules are relatively large. Each module has a curved side facing in towards a circularly shaped cage. According to the description, the surrounding buoyancy system may comprise six, eight or ten modules. These will move relative to each other. The modules may advantageously be made from concrete, especially reinforced concrete.

Patent document NO337333 discloses a cage for rearing fish at sea. The cage includes a rigid, annular floating body surrounding a net. The cage further includes a vertical tension anchor attached to the floating body. The floating body is anchored in such a way that the upper portion of the floating body is below the water surface. A wind-break/breakwater is positioned on top of the floating body. The floating body includes a ballast-water system and the floating body may consist of concrete.

Patent document NO158401 discloses a structure for rearing fish. The structure comprises a lower, in the main solid, structural part consisting of concrete, and an upper, in the main solid, structural part consisting of concrete. The lower structural part and the upper structural part are connected by a plurality of hollow vertical columns. The hollow columns absorb pressure between the lower and upper structural parts. Slanted and vertical connecting members absorb stretching between the lower and upper structural parts. The buoyancy of the structure is adjusted by ballasting the hollow columns with water. In that way, the upper structural part may be brought to project above a water surface by emptying the columns of water. The structure is then a partially submersible (so-called semi-submersible) structure. In bad weather and high waves, the entire structure may be lowered so that the upper structural part, too, is submerged. The upper structural part is provided with through cut-outs, and the lower structural part is provided with through cut-outs. A cut-out in the upper structural part coincides with a cut-out in the lower structural part. A net bag, which forms an enclosure for fish, is interposed between the cut-outs of the lower structural part and the upper structural part. The net bag is also provided with a roof of netting for the structure to be submersible.

Patent document NO166511 discloses a semi-submersible fish farm. The farm includes a deck resting on a plurality of buoyancy columns. At their bottoms, the buoyancy columns are resting on a bottom frame. The bottom frame may be formed as a box structure made of reinforced concrete. The bottom frame may be provided with buoyancy means. The farm is raised and lowered in the sea by adjusting the buoyancy of the buoyancy columns. The farm is a semi-submersible farm. The farm comprises a plurality of tanks or silos for rearing fish. The tanks have tight walls and tight bottoms. Water flows in and out of the tank through closable openings in the wall. The tanks may consist of steel, plastic or concrete. The tanks extend through openings in the deck and in the bottom frame, and the tanks project downwards and beyond the bottom frame.

It is known that a closed, circular cage may consist of concrete. The walls and bottom are continuous and consist of concrete. Further, a concrete raft with chambers for rearing fish is known. Each chamber constitutes a rearing unit. The walls and bottoms of the chambers consist of concrete. A plurality of chambers may be arranged side by side in two rows.

Sketches of a circularly shaped cage made of concrete are also known, the cage consisting of concentric, annular cages. Further, sketches of a circularly shaped cage made of concrete, comprising walls oriented radially out from a centre to form sector-shaped rearing units, are known.

JP H06 113695 A discloses a floating farm for rearing an aquatic organism, the farm comprising at least three rearing units, each rearing unit being surrounded at its upper portion by a continuous wall, wherein the continuous walls form a continuous surface against the water in the rearing unit, wherein the continuous walls form a floating body, and the continuous walls are connected to a connecting wall, wherein the floating farm comprises a number of connecting walls surrounding the rearing units, the connecting walls between the at least three rearing units together with the rearing units, seen from above, forming a honeycomb shape.

There is a need for fish farms that may be placed in more exposed locations than the known steel cages and plastic cages. These are locations which are less shielded by islands, islets and rocks, but which are still located within the outermost skerries. The wave height is larger in such exposed locations. A fish farm in such a location may be exposed to strong waves that have a wave height of, for example, 6 metres, 8 metres and larger than 8 metres. The fish farm must be large enough and stable enough to stand such waves. There is further a need for a fish farm which may be stationarily anchored and be formed in such a way that the farm will be stable no matter what direction the waves are coming from. There is also a need for a fish farm in which a vessel may moor to the fish farm on the leeward side no matter what direction the waves are coming from.

There is further a need for a fish farm that has deep, closed enclosures for the fish.

This will safeguard the advantages of fish farms in which the enclosures consist of a netting.

There is further a need for a fish farm in which the fish are not exposed to fish parasites living in the uppermost part of a water column.

The invention has for its object to remedy or to reduce at least one of the drawbacks of the prior art or at least provide a useful alternative to the prior art.

The object is achieved by the invention defined in claim 1.

The invention relates to a floating farm for rearing fish, the farm consisting of one unit, and the necessary functions for operating the farm being gathered on the farm.

The farm is thus relatively compact. The farm includes a surrounding outer wall which will also function as a breakwater. The farm comprises cages, crew quarters, feed silos and a feeding system. This makes a special feed raft with feed silos and crew quarters unnecessary. Further, there is no need for a work boat to transport crew between the feed raft and the cages or between the cages. A farm like that is also advantageous because it may be provided with one or more cranes fixedly mounted on the farm structure. This simplifies maintenance work. Further, there is no need for long feed hoses between the feed raft and the cages. A farm like that can be anchored in a simple way with a small number of anchors, such as three anchors. A farm like that is also stable and provides good and safe work conditions. The maintenance work is simplified. A farm of this type also provides better protection for the enclosures of the cages against damage from work boats and drifting objects. The number of vessel calls is reduced substantially. These factors reduce the risk of fish escaping from the cages. Attacks of salmon louse are substantially reduced by surface water not being allowed to enter the enclosures, but being shut out by the surrounding outer wall. The farm may further be provided with a skirt or a curtain projecting downwards from the surrounding outer wall. The skirt or curtain surrounds the entire farm and projects down far enough for salmon-louse larvae not to get into the enclosures. The surrounding wall forms a high freeboard, and the surrounding wall may further be provided with a wave deflector at its top side. This prevents salmon-louse larvae from being able to get into the enclosures in choppy sea or sea spray.

The fact that the farm, viewed from above, is formed as a triangle, a rhombus or a pentagon is particularly advantageous. This gives a particularly stable farm regardless of wave direction and stable by large wave heights as well. A stable farm also gives less wear on the net and other equipment floating in or being submerged in the enclosures. The walls of the farm work as breakwaters so that the water surface inside the rearing units will be calmer. Calmer water conditions and small movements in the nets of the enclosures give good fish health. A farm like that provides for industrial operation of a farm for rearing fish.

A farm like that may further be constructed in such a way that it cannot sink, even if it should suffer damage from waves or from a vessel. The farm has been built with sufficient buoyancy to withstand all the internal spaces becoming filled with water.

The freeboard of the floating fish farm according to the invention is substantially determined by the buoyancy of the farm. The farm may be operated without any need of ballasting the farm.

The invention defined in claim 1 discloses a floating farm for rearing an aquatic organism, the farm comprising at least three rigidly connected rearing units, each rearing unit being surrounded, at its upper portion, by a continuous wall formed of a rigid material. The continuous wall forms a floating body, at least in a portion, and the continuous wall of a first rearing unit and the continuous wall of a second rearing unit are rigidly connected to a connecting wall formed of a rigid material, and, viewed from above, the connecting walls between the at least three rearing units together with the rearing units form a triangular shape, a rhomboidal shape or a pentagonal shape.

The connecting wall may form a floating body. The continuous walls and the connecting walls form a continuous hull. The hull may include a central service area between the rearing units. Cavities in the continuous walls and in the connecting walls may be filled with a buoyancy material. The buoyancy material may consist of a polymer material. The polymer material may be extruded polystyrene or another suitable polymer material filled with air. The floating bodies have a large enough buoyancy altogether to keep the farm afloat even if the service area becomes filled completely with water.

In its upper portion, the rearing unit may be open towards a water column below the upper portion. In its lower portion, the wall of the rearing unit may be provided with a surrounding mounting for a closed net bag, and the net bag may project down beyond the wall. The surrounding mounting may comprise a mounting ring. The closed net bag may be attached, at its upper portion, to the mounting ring.

Two continuous walls and one connecting wall may define a well between two rearing units. The continuous wall may be provided with a through submerged channel between the well and at least one of the first and second rearing units. The channel may have an inlet in the well and an outlet in the upper portion of the rearing unit, and the inlet may be provided with a propeller or thruster. The channel may form a longitudinal direction, and the longitudinal direction may, in the main, be tangential to the rearing unit, seen from above.

The floating farm may further be provided with a well case in the well. The channel may have an inlet in the well case. The well case may be provided with a bottom and a plurality of through openings in the bottom. A pipe may end in the through opening and the pipe may extend downwards in a water column. The pipe may have been run at an angle downwards in the water column and out from the floating farm.

The rigid material may consist of concrete. The concrete may be reinforced concrete. The continuous wall may be circular. The connecting walls and the rearing units, in nose portions, may be provided, at their bottom portions, with a skirt projecting downwards. The skirt projecting downwards may be displaceable in a vertical direction along an outer wall of the hull.

A floating farm for rearing an aquatic organism is described as well, the farm not forming part of the invention and possibly comprising at least two rigidly connected rearing units, each rearing unit possibly being surrounded, at its upper portion, by a continuous wall made of a rigid material, the wall possibly forming a floating body, at least in a portion, and the continuous wall of a first rearing unit and the continuous wall of a second rearing unit possibly being rigidly connected to an outer wall made of a rigid material. The continuous walls and the outer wall may define a well between the first rearing unit and the second rearing unit, and the continuous wall may be provided with a through channel between the well and at least one of the first and second rearing units.

The channel may be provided with a propeller or a thruster at its well end. The channel may form a longitudinal direction, and the longitudinal direction may be tangential to the rearing unit, seen from above.

The floating farm may further be provided with a well case in the well. The channel may have an inlet in the well case. The well case may be provided with a bottom and a plurality of through openings in the bottom. A pipe may end in the through opening, and the pipe may extend downwards in a water column. The pipe may have been run at an angle downwards in the water column and out from the floating farm.

A floating farm for rearing an aquatic organism is described as well, the farm not forming part of the invention and possibly comprising at least one rearing unit which is possibly surrounded, at its upper portion, by a continuous wall made of a rigid material. The wall may be provided, at its lower portion, with a surrounding mounting for a closed net bag, and the net bag projects down beyond the wall.

The surrounding mounting may be displaceable between the upper portion of the wall and the lower portion of the wall. The lower portion of the wall may be provided with a ledge projecting from the wall inwards in the rearing unit. The surrounding mounting may rest on the inward-projecting ledge.

In what follows, example of preferred embodiments are described, which are visualized in the accompanying drawings, in which:
- Figure 1: shows a fish farm according to the invention, seen from above;
- Figure 2: shows a section, on the same scale as figure 1, through the fish farm, seen from above;
- Figure 3: shows a side view of the fish farm, on a larger scale;
- Figure 4: shows a section through the fish farm, seen from the side, on the same scale as figure 3;
- Figure 5: shows a detail of figure 4 on a larger scale, relating to a connecting wall;
- Figure 6: shows a partial section, on a different scale, through a wall in a rearing unit;
- Figure 7: shows the same as figure 2 and a flow pattern for water within a rearing unit;
- Figure 8: shows the same as figure 2, on the same scale, a well system for the intake of water being shown in another embodiment;
- Figure 9: shows a detail of the water intake shown in figure 8, on the same scale as figure 5;
- Figure 10: shows a rhomboidal fish farm according to the invention, on a different scale; and
- Figure 11: shows a pentagonal fish farm according to the invention, on the same scale as figure 10.

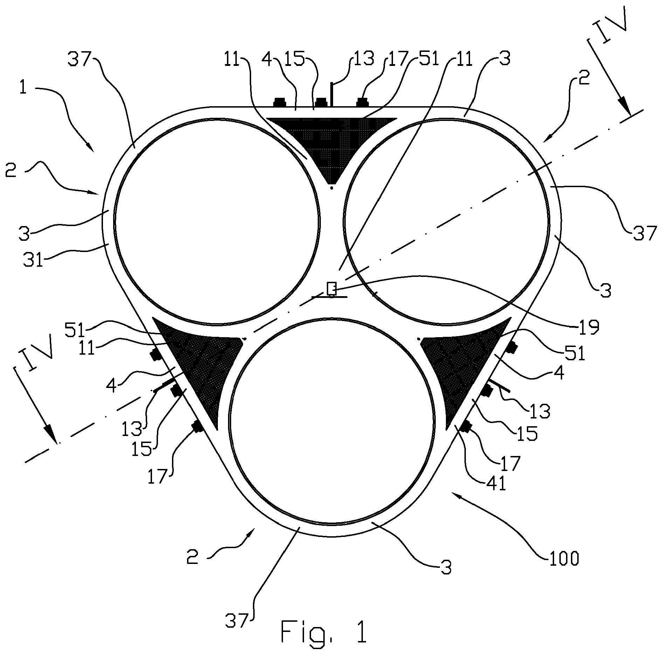

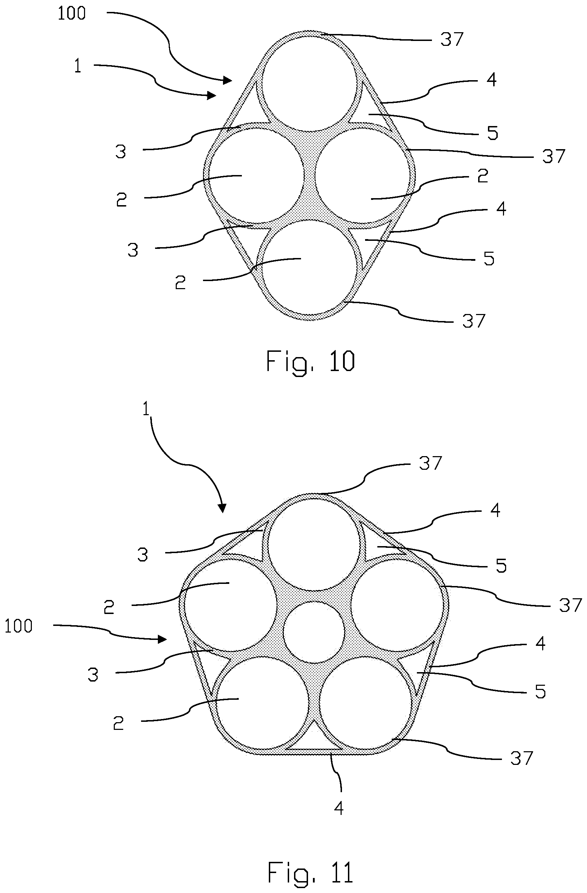

In the drawings, the reference numeral 1 indicates a floating farm for rearing fish according to the invention. The floating farm 1 comprises rigidly connected rearing units 2. Each rearing unit 2 comprises a continuous wall 3 at its upper portion 20. A connecting wall 4 extends between the rearing units 2. The connecting wall 4 is rigidly connected to the walls 3. Seen from above, the floating farm 1 forms a triangular shape as shown in figures 1, 2, 7 and 8. In an alternative embodiment, the floating farm 1 comprises four rearing units 2. Seen from above, the floating farm 1 with four rearing units 2 will form a rhomboidal shape as shown in figure 10. Seen from above, the floating farm 1 with five rearing units 2 will form a pentagon as shown in figure 11. The continuous wall 3 and the connecting wall 4 consist of a rigid material. The rigid material may consist of concrete, especially reinforced concrete. In an alternative embodiment, the rigid material may consist of a metal, such as steel. In a further alternative embodiment, the rigid material may consist of a combination of reinforced concrete and a metal.

By a continuous wall 3 is meant that the wall 3 forms a continuous surface against the water in the rearing unit 2.

The continuous wall 3 and the connecting wall 4 are rigidly connected. A portion of the continuous wall 3 between two connecting walls 4 form a nose portion 37. The connecting wall 4 is tangentially connected to the continuous wall 3.

The floating farm 1 is provided with a deck 11 between the rearing units 2 and the connecting walls 4. The floating farm 1 is moored to a seabed (not shown) with a plurality of anchors 13. The floating farm 1 is further shown with a mooring place 15 for a vessel (not shown) along the connecting wall 4. The mooring place 15 is provided with a plurality of fenders 17. The floating farm 1 may further be provided with a wind turbine 19. The wind turbine 19 supplies the floating farm 1 with electrical power.

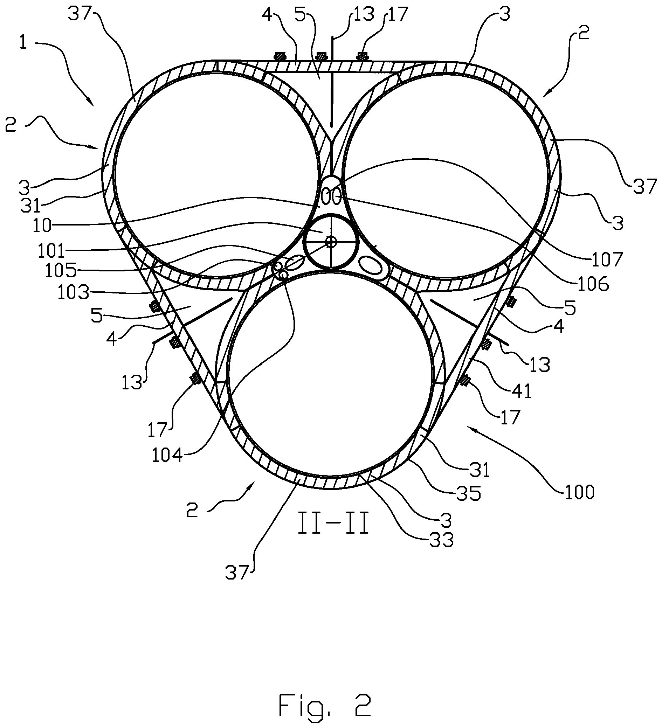

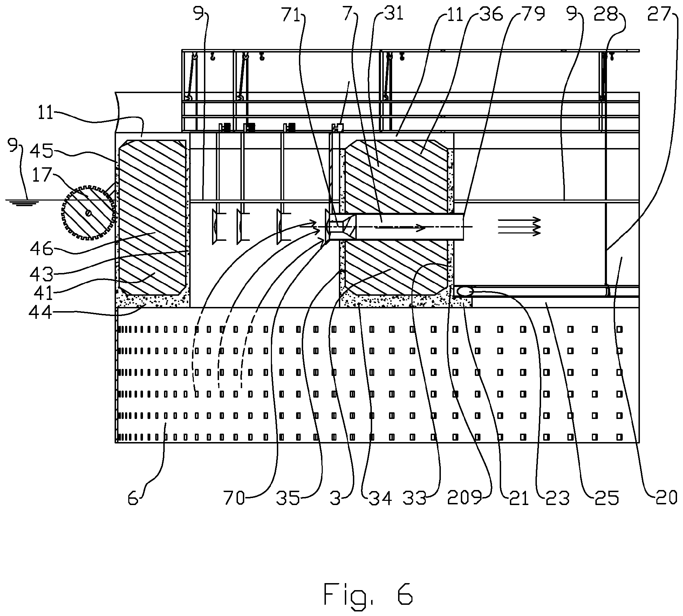

The connecting wall 4 and the walls 3 of two rearing units 2 form a triangular area between them, as shown in figures 2, 7, 8, 10 and 11. The triangular area constitutes a well 5. The well 5 may be covered on its top side with a well deck 51. The well deck 51 constitutes a portion of the deck 11 as shown in figure 1. In its lower portion, the well 5 is open to the water. The well 5 is therefore filled with water, and a water surface 9 has the same level on the outside of the floating farm 1, in the well 5 and in the rearing unit 2 as shown in figure 6.

The continuous wall 3 forms a portion of a floating body 31. The continuous wall 3 consists of a continuous inner wall 33, a bottom wall 34 and an outer wall 35. This is shown the most clearly in figure 6. The deck 11 extends across the space between the inner wall 33 and the outer wall 35. The space between the inner wall 33, bottom wall 34 and outer wall 35 is filled with a first buoyancy material 36.

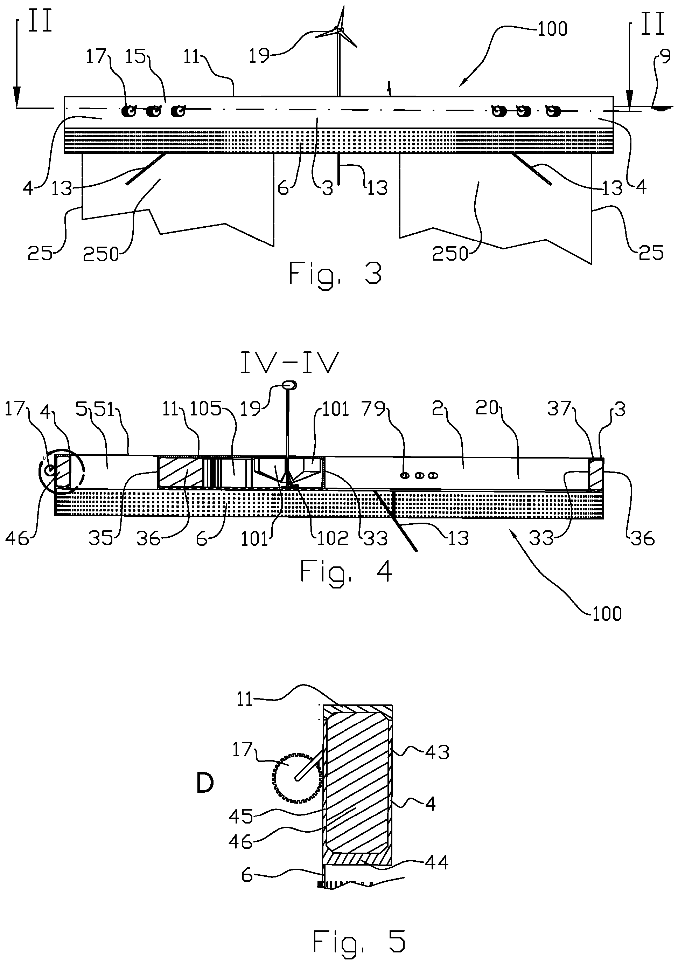

The connecting wall 4 forms a floating body 41. The connecting wall 4 consists of an inner wall 43, a bottom wall 44 and an outer wall 45. This is shown the most clearly in figures 5 and 6. The deck 11 extends across the space between the inner wall 43 and the outer wall 45. The space between the inner wall 43, bottom wall 44 and outer wall 45 is filled with a second buoyancy material 46. The first buoyancy material 36 may be the same as the second buoyancy material 46.

In an outer edge of their lower portions, the connecting wall 4 and the nose portion 37 are provided with a skirt 6. The skirt 6 extends around the entire outer edge of the farm 1. The skirt 6 may consist of a finely meshed cloth. A finely meshed cloth will prevent salmon-louse larvae in the upper part of the water column from drifting under the walls 3 and the connecting walls 4 and further into the farm. The skirt 6 may be kept spread by means of a lead rope (not shown) at its lower edge.

The skirt 6 is provided with a plurality of first wires (not shown), so that the depth of the skirt 6 below the connecting wall 4 and the nose portion 37 can be adjusted by adjusting the lengths of the first wires. The skirt 6 is further provided with a plurality of second wires (not shown). The skirt 6 is displaceable along the outer wall 35 and the outer wall 45, and the skirt 6 is raised and lowered along the outer wall 35 and the outer wall 45 by adjusting the lengths of the second wires. The first wires and the second wires are run through pulleys (not shown) at the railing (not shown) of the outer wall 35 and the outer wall 45. The skirt 6 can be cleaned when it has been raised to its upper position along the outer wall 35 and the outer wall 45.

As shown in figures 2 and 4, the farm 1 is provided with a central service area 10. The service area 10 may include a plurality of feed silos 101, one or more blowers 102 in a feeding system, fuel tanks 103, water tanks 104, silage tanks 105 for dead fish, waste tanks 106 and chemical tanks 107, among other things. The wind turbine 19 may be positioned in the service area 10. Crew quarters and offices (not shown) may also be positioned in the service area 10.

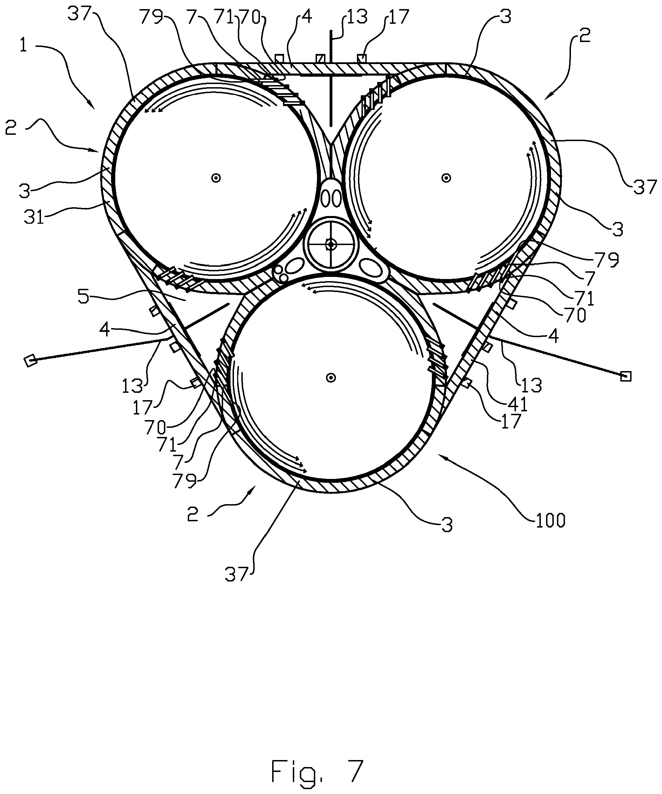

One or more through channels 7 extend between the well 5 and the inside of the rearing unit 2 through the continuous wall 3 as shown in figures 6, 7 and 8. The channel 7 has an inlet 70 in the well 5 and an outlet 79 in the upper portion 20 of the rearing unit 2. The inlet 70 is provided with a propeller or thruster 71. The channel 7 is provided with a barrier (not shown) preventing fish (not shown) from swimming out of the rearing unit 2 into the well 5. In one embodiment, the longitudinal axis of the channel 7, seen from above, may be oriented substantially tangentially to the rearing unit 2 as shown in figure 7. The inlet 70 and outlet 79 of the channel 7 are below the water surface 9. The propeller or thruster 71 displaces water substantially horizontally from the well 5 through the channel 7 and into the upper portion 20 of the rearing unit 2.

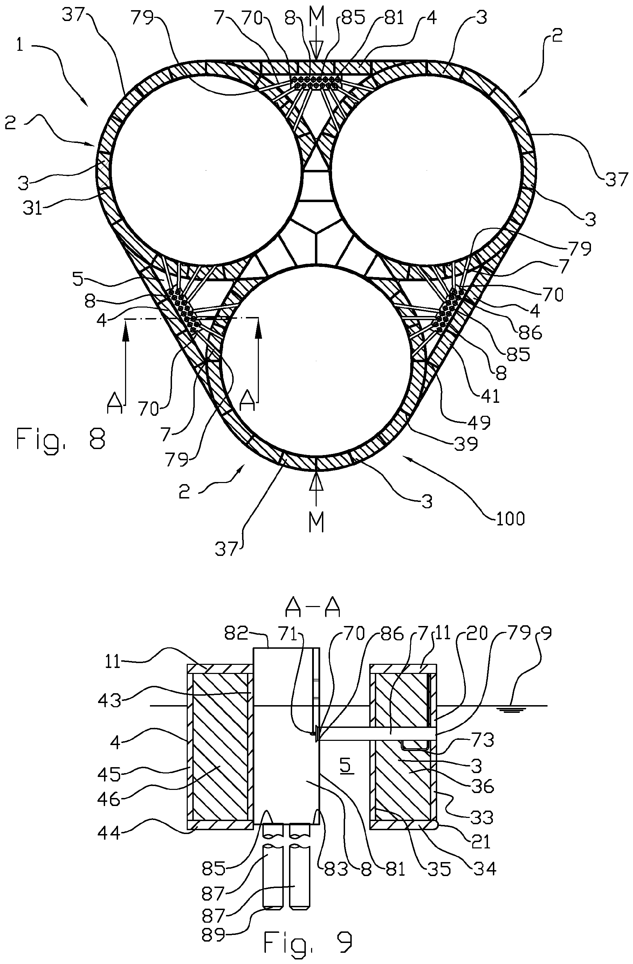

An alternative embodiment for supplying water to the upper portion 20 of the rearing unit 2 is shown in figures 8 and 9. A well case 8 is positioned in the well 5. The well case 8 is shown positioned at the connecting wall 4. In a further alternative embodiment (not shown), the well case 8 may be positioned at the continuous wall 3. In its simplest form, the well case 8 may be a case without a top and a bottom. The well case 8, which is shown in figure 9, is provided with a side wall 81, a top wall 82 and a bottom 83. The bottom 83 is provided with a plurality of through openings 85. A pipe 87 ends in one of the openings 85. The pipe 87 extends downwards in a water column so that a pipe inlet 89 is positioned at a desired depth in the water column. The well case 8 is provided with a plurality of pipes 87, preferably one pipe 87 for each opening 85. The well case 8 is further provided with a through channel opening 86 in the side wall 81. The inlet 70 of the channel 7 has been run through the channel opening 86.

In figure 9 it is further shown that air or oxygen can be supplied to the channel 7 through a supply line 73.

With advantage, the pipes 87 may be run somewhat at an angle downwards in the water column and out from the floating farm 1. The pipes 87 are thereby prevented from coming into contact with net bags 25 and damaging the net bags 25.

The upper portion 20 of the rearing unit 2 is shown provided, at its lower part, with a ledge 21 projecting inwards in the rearing unit 2, see figure 6. A mounting ring 23 for a closed net bag 25 in the rearing unit 2 may rest on the ledge 21. The net bag 25 is attached, at its upper portion, to the mounting ring 23. The mounting ring 23 extends all the way around the inner wall 33. The distances between the mounting ring 23 and the inner wall 33 and between the mounting ring 23 and the ledge 21 are so small that a fish in the upper portion 20 of the rearing unit 2 cannot swim between the mounting ring 23 and the inner wall and the ledge 21 and out to the outside of the net bag 25. The mounting ring 23 is provided with a lifting means 27 which can raise and lower the mounting ring 23 along the inner wall 33. The lifting means 27 may be a wire or a chain. A hoisting winch 28 moves the lifting means 27. In another embodiment, the mounting ring 23 may hang on the lifting means 27 without being supported by a ledge 21. The ledge 21 is thus not a necessary part of the rearing unit 2.

An upper portion 250 of a net bag 25 is shown schematically in figure 3. The net bag 25 may be an open net bag formed of a net. It is known in the art that such a net bag may have different shapes. The net bag 25 may be of a cylindrical shape in its upper portion 250, as shown. The net bag 25 may have the shape of a cone. In an alternative embodiment, the net bag 25 may be half closed with a net in the upper portion 250 and with a tight cloth in the lower portion (not shown) of the net bag 25. In a further alternative embodiment, the net bag 25 may be a tight net bag 25 in which a tight cloth constitutes the net bag 25 (not shown). The farm 1 is thus suitable for a number of different net bags 25. A first rearing unit 2 may be provided with a net bag 25 of a first type, whereas a neighbouring rearing unit 2 may be provided with a net bag 25 of a second type.

A farm 1 according to the invention may, for example, be provided with walls 3, 4 that are 6.5 m high. The wall 3 may have a freeboard of 2.5 m above the water surface 9 in the rearing unit 2. There may thus be a water column of 4 m within the upper portion 20 of the rearing unit 2 surrounded by the wall 3. The farm 1 may have other dimensions. For example, the walls 3, 4 may be 10 m high, the freeboard may be 2.5 m and the water column within the upper portion 20 of the rearing unit 2 may be 7.5 m. Expected wave forces, the size of the rearing unit 2, the total weight of the farm 1 and the weight of equipment and full feed silos 101 are some of the dimensioning factors.

The water column in the upper portion 20 constitutes a considerable volume. There is a need for an efficient water exchange in the upper portion 20 to ensure a sufficient oxygen content in this water. The propellers or thrusters 71 in the channels 7 push fresh water from the well 5 to the upper portion 20. In figure 7, four channels 7 are shown side by side in one group. In figure 8, too, four channels 7 are shown in one group. Each rearing unit 2 may be supplied with water from two wells 5. The water in the well 5 flows up from the underside and outside of the farm 1. The water flowing tangentially into the rearing unit 2 will create a circular current as shown in figure 7. This may be advantageous for fish that orient in a water current with their heads opposite the direction of flow, like a salmonoid. In an alternative embodiment (not shown), each channel 7 may be provided with a supply channel that extends downwards in the water column so that the water is taken from a chosen depth, such as 10 m, 15 m or 20 m or deeper. In the embodiment shown in figure 8, it is shown that the channels 7 are supplied with water from the well case 8. The water inside the well case 8 enters the well case from a desired depth through the pipes 87. This has the advantage of allowing the number of pipes 87 to be larger than the number of channels 7. In the figures, fifteen openings 85 for pipes 87 and eight channels 7 are shown for each well case 8. The water in the well case 8 is kept separated from the water in the well 5. The water enters the well case 8 because of the hydrostatic pressure and without any pumping. The water is moved sideways from the well case 8 to the rearing unit 2 without the water being lifted by means of a pump.

The draught of the farm 1 prevents parasitic organisms in the upper water layer from drifting into the rearing units 2. Parasitic organisms may be salmon lice. The skirt 6 will further prevent parasitic organisms in the upper water layer from drifting into the rearing units 2.

The rearing unit 2 includes an upper portion 20 with a tight wall. The rearing unit 2 further includes a closed net bag 25 which, in normal operation, has its upper portion 250 at the lower part 209 of the upper portion 20. This has the advantage of the stable floating properties of the farm 1 being combined with the large volume of the net bag 25. The volume in the upper portion 20 constitutes an additional volume to the volume of the net bag 25, and this volume may also be utilized for farming. When the net bag 25 comprises a netting, the rearing unit 2 will comprise a semi-closed cage, the cage being closed at its upper portion.

The mounting ring 23 of the net bag 25 rests on the ledge 21. As the farm 1 is stable, the mounting ring 23 will be subjected to smaller movements and smaller forces than known mounting that are floating in the water surface 9 and, at the same time, are forming the buoyancy means of the cage. The net bag 25 will therefore also stand steadily in the water column.

The mounting ring 23 and the net bag 25 may be raised inside the upper portion 20 with the help of the lifting means 27 and the hoisting winch 28. The mounting ring 23 may also be raised to a height above the deck 11. Maintenance on the mounting ring 23 may thereby be carried out at deck height. The net bag 25 may further be raised with the help of one or more cranes (not shown) standing on the deck 11. Changing a net bag 25 and crowding fish can therefore be done in the ways known in the trade.

The deck 11 may be provided with a heating element (not shown) to prevent icing in winter. The heating element may comprise a water-borne heating system. The water-borne heating system may include pipes, for example plastic pipes, which are cast into the deck 11. A wave deflector (not shown) along the edge of the floating farm 1 may also be provided with a heating element to prevent icing. The heating element may comprise a water-borne heating system.

The floating farm 1 may be considered a so-called monohull. That is to say, the hull, which is made up of the continuous walls 3, the connecting walls 4 and the service area 10, is a continuous hull 100. The hull 100 is reinforced with bulkheads 39 in the walls 3 and with bulkheads 49 in the connecting walls 4 (see figure 8).

The hull 100 of the floating farm 1 is a rigid structure which is to resist considerable forces from waves, bending moments from passing waves. The bending moment will be largest amidships for the hull 100. The hull 100, as shown in figures 1-4, 7, 8, is advantageous in relation to the bending moment amidships as the hull 100 has its largest cross section along the midship axis M-M, see figure 8. The midship axis M-M shows one of the midship axes of the hull 100. The hull 100 is symmetrical and has three midship axes.

It should be noted that all the above-mentioned embodiments illustrate the invention, but do not limit it, and persons skilled in the art may construct many alternative embodiments without departing from the scope of the attached claims. In the claims, reference numbers in brackets are not to be regarded as restrictive.

The use of the verb "to comprise" and its different forms does not exclude the presence of elements or steps that are not mentioned in the claims. The indefinite article "a" or "an" before an element does not exclude the presence of several such elements.

## Claims

1. A floating farm (1) for rearing an aquatic organism, the farm (1) comprising at least three rigidly connected rearing units (2), each rearing unit (2) being surrounded at its upper portion (20) by a continuous wall (3) formed of a rigid material, wherein the continuous wall (3) of each rearing unit forms a continuous surface against the water in the rearing unit (2), the continuous wall (3) of each rearing unit forms a floating body (31), at least in a portion, and the continuous wall (3) of a first rearing unit (2) and the continuous wall (3) of a second rearing unit (2) are rigidly connected to a connecting wall (4) formed of a rigid material, the floating farm (1) comprises a number of connecting walls (4) which is equal to to the number of rearing units (2), the connecting walls (4) between the at least three rearing units (2) together with the rearing units (2), seen from above, forming a triangular shape, a rhomboidal shape or a pentagonal shape.

2. The floating farm (1) according to claim 1, wherein the connecting wall (4) forms a floating body (41).

3. The floating farm (1) according to any one of the preceding claims, wherein the continuous walls (3) and the connecting walls (4) form a continuous hull (100).

4. The floating farm (1) according to any one of the preceding claims, wherein the rearing unit (2) is open in its lower portion.

5. The farm (1) according to any one of the preceding claims, wherein two continuous walls (3) and one connecting wall (4) define a well (5) between two rearing units (2).

6. The floating farm (1) according to claim 5, wherein the continuous wall (3) is formed with a through submerged channel (7) between the well (5) and at least one of the first and second rearing units (2).

7. The floating farm (1) according to claim 6, wherein the channel (7) has an inlet (70) in the well (5) and an outlet (79) in the upper portion (20) of the rearing unit (2) and the inlet (70) is provided with a propeller or thruster (71).

8. The floating farm (1) according to any one of claims 6 and 7, wherein the channel (7) forms a longitudinal direction, and the longitudinal direction is substantially tangential to the rearing unit (2) seen from above.

9. The floating farm (1) according to any one of the preceding claims, wherein the rigid material consists of reinforced concrete.

10. The floating farm (1) according to any one of the preceding claims, wherein the continuous wall (3) is circular.

11. The floating farm (1) according to any one of the preceding claims, wherein the connecting walls (4) and the rearing units (2), in nose portions (37), are provided, at their lower portions, with a skirt projecting downwards (6).

12. The floating farm (1) according to claim 11, wherein the skirt (6) projecting downwards is displaceable in a vertical direction along an outer wall (35, 45) of the hull (100).

## Patentansprüche

1. Schwimmende Zuchtanlage (1) zur Aufzucht eines aquatischen Organismus', wobei die Zuchtanlage (1) mindestens drei starr verbundene Aufzuchteinheiten (2) aufweist, wobei jede Aufzuchteinheit (2) an seinem oberen Abschnitt (20) von einer durchgängigen Wand (3) umgeben ist, welche aus einem starren Material gebildet ist, wobei die durchgängige Wand (3) jeder Aufzuchteinheit eine kontinuierliche Oberfläche gegen das Wasser in der Aufzuchteinheit (2) bildet, wobei die durchgängige Wand (3) jeder Aufzuchteinheit, mindestens in einem Abschnitt, einen Schwimmkörper (31) bildet, und wobei die durchgängige Wand (3) einer ersten Aufzuchteinheit (2) und die durchgängige Wand (3) einer zweiten Aufzuchteinheit (2) starr verbunden sind mit einer aus einem starrem Material gebildeten Verbindungswand (4), wobei die schwimmende Zuchtanlage (1) eine Anzahl von Verbindungswänden (4) aufweist, welche gleich ist wie die Anzahl von Aufzuchteinheiten (2), wobei die Verbindungswände (4) zwischen den mindestens drei Aufzuchteinheiten (2) zusammen mit den Aufzuchteinheiten (2), von oben gesehen eine dreieckige Form, eine rhomboidische Form, oder eine fünfeckige Form aufweisen.

2. Schwimmende Zuchtanlage (1) gemäss Anspruch 1, wobei die Verbindungswand (4) einen Schwimmkörper (41) bildet.

3. Schwimmende Zuchtanlage (1) gemäss einem der vorhergehenden Ansprüche, wobei die durchgängigen Wände (3) und die Verbindungswände (4) einen durchgängigen Rumpf (100) bilden.

4. Schwimmende Zuchtanlage (1) gemäss einem der vorhergehenden Ansprüche, wobei die Aufzuchteinheit (2) in seinem unteren Abschnitt offen ist.

5. Zuchtanlage (1) gemäss einem der vorhergehenden Ansprüche, wobei zwei durchgängige Wände (3) und eine Verbindungswand (4) einen Schacht (5) zwischen zwei Aufzuchteinheiten (2) definieren.

6. Schwimmende Zuchtanlage (1) gemäss Anspruch 5, wobei die durchgängige Wand (3) mit einem Unterwasser-Durchflusskanal (7) zwischen dem Schacht (5) und mindestens einer der ersten und zweiten Aufzuchteinheit (2) ausgebildet ist.

7. Schwimmende Zuchtanlage (1) gemäss Anspruch 6, wobei der Kanal (7) einen Eingang (70) im Schacht (5) aufweist, und einen Ausgang (79) im oberen Abschnitt (20) der Aufzuchteinheit (2) aufweist, und wobei der Eingang (70) mit einem Propeller oder Strahlruder (71) ausgestattet ist.

8. Schwimmende Zuchtanlage (1) gemäss einem der Ansprüche 6 oder 7, wobei der Kanal (7) eine Längsrichtung bildet, und wobei die Längsrichtung von oben gesehen im Wesentlichen tangential zur Aufzuchteinheit (2) verläuft.

9. Schwimmende Zuchtanlage (1) gemäss einem der vorhergehenden Ansprüche, wobei das starre Material aus Stahlbeton besteht.

10. Schwimmende Zuchtanlage (1) gemäss einem der vorhergehenden Ansprüche, wobei die durchgängige Wand (3) kreisförmig ist.

11. Schwimmende Zuchtanlage (1) gemäss einem der vorhergehenden Ansprüche, wobei die Verbindungswände (4) und die Aufzuchteinheiten (2) in Nasenabschnitten (37) an ihren unteren Abschnitten mit einer nach unten ragenden Schürze (6) ausgebildet sind.

12. Schwimmende Zuchtanlage (1) gemäss Anspruch 11, wobei die nach unten ragende Schürze (6) in einer vertikalen Richtung entlang einer Aussenwand (35, 45) des Rumpfes (100) verschiebbar ist.

## Revendications

1. Ferme flottante (1) pour l'élevage d'un organisme aquatique, la ferme (1) comprenant au moins trois unités d'élevage (2) reliées de manière rigide, chaque unité d'élevage (2) étant entourée au niveau de sa partie supérieure (20) par une paroi continue (3 ) formé d'un matériau rigide, dans laquelle la paroi continue (3) de chaque unité d'élevage forme une surface continue contre l'eau dans l'unité d'élevage (2), la paroi continue (3) de chaque unité d'élevage forme un corps flottant (31), au moins en partie, et la paroi continue (3) d'une première unité d'élevage (2) et la paroi continue (3) d'une deuxième unité d'élevage (2) sont reliées de manière rigide à une paroi de liaison (4) formée d'un matériau rigide, la ferme flottante (1) comprend un nombre de parois de de liaison (4) qui est égal au nombre d'unités d'élevage (2), les parois de liaison (4) entre les au moins trois unités d'élevage (2), ensemble avec les unités d'élevage (2), vues de dessus, formant une forme triangulaire, une forme rhomboïdale ou une forme pentagonale.

2. La ferme flottante (1) selon la revendication 1, dans laquelle la paroi de liaison (4) forme un corps flottant (41).

3. La ferme flottante (1) selon l'une quelconque des revendications précédentes, dans laquelle les parois continues (3) et les parois de liaison (4) forment une coque continue (100).

4. La ferme flottante (1) selon l'une quelconque des revendications précédentes, dans laquelle l'unité d'élevage (2) est ouverte dans sa partie inférieure.

5. La ferme (1) selon l'une quelconque des revendications précédentes, dans laquelle deux parois continues (3) et une paroi de liaison (4) définissent un puits (5) entre deux unités d'élevage (2).

6. La ferme flottante (1) selon la revendication 5, dans laquelle la paroi continue (3) est formée avec un canal immergé traversant (7) entre le puits (5) et au moins l'une des première et deuxième unités d'élevage (2).

7. La ferme flottante (1) selon la revendication 6, dans laquelle le canal (7) présente une entrée (70) dans le puits (5) et une sortie (79) dans la partie supérieure (20) de l'unité d'élevage (2) et l'entrée (70) est dotée d'une hélice ou d'un propulseur (71).

8. La ferme flottante (1) selon l'une quelconque des revendications 6 et 7, dans laquelle le canal (7) forme une direction longitudinale, et la direction longitudinale est sensiblement tangente à l'unité d'élevage (2), vue de dessus.

9. La ferme flottante (1) selon l'une quelconque des revendications précédentes, dans laquelle le matériau rigide est constitué de béton armé.

10. La ferme flottante (1) selon l'une quelconque des revendications précédentes, dans laquelle la paroi continue (3) est circulaire.

11. La ferme flottante (1) selon l'une quelconque des revendications précédentes, dans laquelle les parois de liaison (4) et les unités d'élevage (2), en portions de nez (37), sont munies, au niveau de leur partie inférieure, d'une jupe faisant saillie vers le bas (6).

12. La ferme flottante (1) selon la revendication 11, dans laquelle la jupe (6) faisant saillie vers le bas est déplaçable dans une direction verticale le long d'une paroi externe (35, 45) de la coque (100).
